# EUROPÄISCHE PATENTSCHRIFT

(11) **EP 3 678 991 B1**
(45) Veröffentlichungstag und Bekanntmachung des Hinweises auf die Patenterteilung: **05.05.2021**
(21) Anmeldenummer: 18753142.1
(22) Anmeldetag: 07.08.2018
(51) Int. Cl.: C01B 32/55

(54) **VORRICHTUNG ZUM DOSIEREN VON KOHLENDIOXIDSCHNEE**
DEVICE FOR METERING CARBON DIOXIDE SNOW
DISPOSITIF DE DOSAGE DE NEIGE CARBONIQUE

(30) Priorität: 09.09.2017 DE 102017008488
(43) Veröffentlichungstag der Anmeldung: 15.07.2020
(73) Patentinhaber: Messer Belgium N.V., 2070 Zwijndrecht (BE)
(72) Erfinder: CLAEYS, Jean-Claude, 2070 Zwijndrecht (BE); SCHUDDINCK, Gerrit, 1850 Grimbergen (BE)
(74) Vertreter: Münzel, Joachim R.
(86) Internationale Anmeldenummer: PCT/EP2018/071431
(87) Internationale Veröffentlichungsnummer: WO 2019/048162

(56) Entgegenhaltungen:
- WO-A2-2012/130453
- CS-B1- 225 663
- FR-A1- 2 518 723
- US-A- 2 120 943
- US-A- 2 145 096
- US-A- 2 253 880

## Beschreibung

Die Erfindung betrifft eine Vorrichtung zum Dosieren von Kohlendioxidschnee, mit einem Vorlagebehälter, in den eine Zuleitung für flüssiges oder schneeförmiges Kohlendioxid sowie eine Gasabzugsleitung zum Abführen von Kohlendioxidgas einmündet, und der eine bodenseitig angeordnete Ausgabeöffnung aufweist und mit zumindest einem beabstandet von der Ausgabeöffnung angeordneten Trennmesser ausgerüstet ist, das von einer ersten, den Innenraum des Vorlagebehälters in zwei Teilvolumina separierende Position in eine zweite, vom Innenraum des Vorlagebehälters seitlich beabstandete Position bewegbar ist.

Um die Oberflächen insbesondere von Lebensmittelprodukten schnell einfrieren zu können, werden diese mit einem kryogenen Kältemittel, beispielsweise mit Kohlendioxidschnee, besprüht. Die Behandlung erfolgt dabei vorzugsweise in einem Gefriertunnel mittels Injektionsdüsen oder sogenannter Schneehörner.

In Schneehörnern erfolgt die Erzeugung von Kohlendioxidschnee durch Entspannen von flüssigem Kohlendioxid unter Ausnutzung des Joule-Thomson-Effekts. Das Schneehorn umfasst dabei ein Entspannungsorgan in Form einer Düse, die üblicherweise im Kopfabschnitt des Schneehorns oberhalb eines senkrecht angeordneten Trichters angeordnet ist. Unter Druck stehendes, flüssiges Kohlendioxid wird an der Entspannungsdüse auf einen Druck von unter 5,18 bar, beispielsweise 1 bar, entspannt, wobei ein Gemisch aus Kohlendioxidgas und Kohlendioxidschnee entsteht. Der Kohlendioxidschnee fällt im Trichter unter der Wirkung der Schwerkraft auf eine zu kühlende Oberfläche hinab. Beim Einsatz derartiger Schneehörner führt jedoch der starke Strom des bei der Entspannung gleichzeitig erzeugten Kohlendioxidgases zu einer Verwirbelung der leichten Schneepartikel und damit zu einer breiten Streuung der Schneepartikel vor der Mündungsöffnung des Schneehorns. Dadurch entsteht insbesondere das Problem, dass sich die Schneepartikel nur sehr ungleichmäßig auf dem zu kühlenden Produkt verteilen und damit zu einem ungleichmäßigen Kühleffekt führen. Zudem wird ein nicht unbeträchtlicher Teil der Schneepartikel am Produkt vorbeigeführt, wodurch eine größere Schneemenge erzeugt werden muss, als es der zur Kühlung eigentlich erforderlichen Menge entspricht.

Es wurde bereits versucht, die Schneeteilchen mit Hilfe mechanischer Einrichtungen, wie etwa Trichter oder Leitbleche, stärker zu fokussieren, wie beispielsweise in der EP 1 188 715 A1, der US 4 415 346 A oder der GB 294 584 A beschrieben.

Aus der EP 2 363 377 A1 ist ein Schneehorn bekannt, bei dem zwischen einer Entspannungskammer und einer Austragsöffnung eine Förderschnecke angeordnet ist. Die Förderschnecke sorgt für eine Trennung des bei der Entspannung erzeugten Gasstroms vom Kohlendioxidschnee und transportiert den Kohlendioxidschnee präzise zum Einsatzort. Dadurch kann Kohlendioxidschnee ohne Verwirbelung durch den Gasstrom einem Verbraucher zugeführt werden. Allerdings erfolgt die Zuführung des Kohlendioxids kontinuierlich; zur gezielten Kühlung einzelner Produkte, die beispielsweise auf einem Förderband durch einen Kühltunnel transportiert werden, ist diese Vorrichtung nur bedingt geeignet.

Aus der US 4 145 894 A ist eine Vorrichtung zum Verteilen von Kohlendioxidschnee auf zu kühlende Produktoberflächen bekannt, die eine genaue Dosierung des Kohlendioxidschnees ermöglichen soll. Dabei ist am Boden eines Vorlagebehälters, in dem Kohlendioxidschnee durch Entspannen von flüssigem Kohlendioxid gewonnen wird, eine Zellenradschleuse angeordnet, mittels der Kohlendioxidschnee aus dem Vorlagebehälter in vorgegebenen Mengen auf ein darunter liegendes Produkt aufgetragen werden kann.

Die EP 0 478 316 B1 beschreibt eine Vorrichtung zum Behandeln von Lebensmittelprodukten mit Kohlendioxidschnee, bei der der Boden eines mit einer Zuführung für flüssiges Kohlendioxid ausgerüsteten Vorlagebehälters mit einer Lochplatte sowie mit einem über die Lochplatte gespannten Drahtgewebe ausgestattet ist. Das Drahtgewebe hält den bei der Entspannung des flüssigen Kohlendioxids erzeugten Kohlendioxidschnee im Vorlagebehälter zurück. Im Einsatz der Vorrichtung wird mittels eines Wischers durch die Maschen des Drahtgewebes und die Öffnungen der Lochplatte hindurch Kohlendioxidschnee gepresst, der anschließend auf die Oberfläche des zu behandelnden Produkts fällt.

Die US 1 795 772 B beschreibt eine Vorrichtung zur Erzeugung kompakter Blöcke aus Trockeneis, bei dem in einem Schneehorn erzeugter Kohlendioxidschnee einem vertikal angeordneten Zylinder mit vorgegebenem Volumen zugeführt wird, in dem der Schnee mittels eines Kolbens verdichtet und der verdichtete Schnee anschließend seitlich ausgeworfen wird.

Bei all diesen Gegenständen besteht allerdings die Gefahr, dass sich Kohlendioxidschnee oder gefrierende Feuchte aus der Umgebungsatmosphäre auf Teilen der Vorrichtung festsetzt, durch den eine genaue Dosierung der Kohlendioxidschneemenge verhindert oder sogar die Funktionsfähigkeit der Apparatur beeinträchtigt wird.

Die US 2 120 943 B beschreibt eine Vorrichtung, in der Kohlendioxidschnee zu Trockeneisblöcken gepresst wird. Dabei fällt Kohlendioxidschnee in einen senkrecht stehenden Vorlagebehälter. Mittels zweier horizontal beweglicher Trennscheiben wird eine Teilmenge des Schnees abgetrennt, anschließend wird der abgeteilte Schnee einer sich an den Vorlagebehälter unterseitig anschließenden Kolbenanordnung zugeführt, in der der Schnee zu einem Block aus hartem Trockeneis gepresst wird. Diese Apparatur ist allerdings in Aufbau und Handhabung sehr aufwändig und nicht geeignet, in rascher Folge Kohlendioxidschnee in einer jeweils genau dosierten Menge auf ein zu kühlendes Produkt aufzutragen.

Das Dokument CS225663B1 offenbart eine Vorrichtung zum Dosieren von Kohlendioxidschnee mit horizontal und vertikal bewegbarem Boden.

Das Dokument WO 2012/130453 A2 offenbart eine Vorrichtung zum Dosieren von Kohlendioxidschnee mit einer Heizeinrichtung.

Aufgabe der Erfindung ist es, eine Vorrichtung zum Bereitstellen einer möglichst genau dosierten Menge an nicht zu Eis verdichtetem Kohlendioxidschnee zu schaffen, bei der die Gefahr der Beeinträchtigung der Funktionsfähigkeit durch Anbacken von Kohlendioxidschnee oder Festfrieren von Feuchtigkeit minimiert ist. Gelöst ist diese Aufgabe durch eine Vorrichtung mit den Merkmalen des Patentanspruchs 1.

Eine Vorrichtung der eingangs genannten Art und Zweckbestimmung ist also dadurch gekennzeichnet, dass der Ausgabeöffnung ein horizontal und vertikal beweglicher Boden zugeordnet ist, der einen dem Innenquerschnitt der Ausgabeöffnung entsprechenden Außenquerschnitt aufweist und der zwischen einer ersten Position, in der die Ausgabeöffnung des Vorlagebehälters freigegeben und der Boden seitlich am Vorlagebehälter angeordnet ist, einer zweiten Position, in der der Boden die Ausgabeöffnung auf Höhe ihrer Mündung schneedicht verschließt, und einer dritten Position, in der der Boden begrenzt in die Ausgabeöffnung des Vorlagebehälters eingeführt ist, bewegbar ist.

Im Innern des vertikal angeordneten, bevorzugt zylindrischen Vorlagebehälters mündet eine an eine Quelle für Kohlendioxid angeschlossene Zuführleitung. Bei der Zuführleitung handelt es sich beispielsweise um eine Zuleitung für flüssiges Kohlendioxid, die im Innern des Vorlagebehälters an einer Entspannungsdüse ausmündet und an der durch Entspannen des flüssigen Kohlendioxids ein Gemisch aus Kohlendioxidschnee und Kohlendioxidgas erzeugt wird. Der Vorlagebehälter besitzt auf seiner unterseitigen Stirnseite eine Ausgabeöffnung für Kohlendioxidschnee, die die Fläche der Stirnseite zumindest teilweise, bevorzugt jedoch weitgehend vollständig einnimmt. Der Vorlagebehälter, zumindest aber die Ausgabeöffnung besitzt einen runden oder rechteckigen, insbesondere quadratischen Querschnitt. Weiterhin mündet aus einem oberen Abschnitt des Vorlagebehälters eine Gasabzugsleitung zum Abführen entstehenden Kohlendioxidgases aus.

Beim Boden handelt es sich um ein horizontal und vertikal verschiebbares oder verschwenkbares, bevorzugt scheibenförmiges Element, das der Größe und Form der Ausgabeöffnung derart angepasst ist, dass es zumindest begrenzt in das Innere des Vorlagebehälters hinein einführbar ist. Der Boden ist in der im Folgenden beschriebenen Weise zwischen drei Positionen bewegbar ist.

In seiner ersten Position befindet sich der Boden seitlich neben der Ausgabeöffnung, bevorzugt derart, dass eine obere Seitenfläche des Bodens im Wesentlichen mit der Ausgabeöffnung an ihrer Ausmündung am Vorlagebehälter fluchtet.

Um aus der ersten in die zweite Position zu kommen, wird der Boden horizontal in Richtung auf die Ausgabeöffnung bewegt. In der zweiten Position des Bodens ist dessen obere Seitenfläche unmittelbar vor der Mündung der Ausgabeöffnung positioniert und deckt diese vollständig ab, sodass dem Vorlagebehälter zugeführter oder in diesem erzeugter Kohlendioxidschnee nicht oder nur in einem nicht nennenswerten Umfang aus der Ausgabeöffnung entweichen kann. Ist der Boden in dieser Position, sammelt sich dem Vorlagebehälter zugeführter Kohlendioxidschnee oberhalb des Bodens im Vorlagebehälter an und bildet eine Schneesäule, deren Höhe bei laufender Zuführung von Kohlendioxidschnee alsbald die vertikale Position des Trennmessers übersteigt. Mittels des Trennmessers kann die Schneesäule im Innern des Vorlagebehälters durchschnitten und so eine im Vorlagebehälter zwischen Boden und Trennmesser befindliche, genau definierte Schneemenge abgeteilt werden.

In seiner dritten Position ist der Boden vertikal nach oben in das Innere der Ausgabeöffnung hinein verschoben. Durch diese Verschiebung wird der sich zwischen Boden und Trennmesser befindliche Kohlendioxidschnee zu einem formstabilen Schneekörper mit einer Dichte von 50-800 kg/m³, bevorzugt 200-800 kg/m³ verdichtet, jedoch nicht so weit, dass zur Bildung eines harten Trockeneisblocks (mit einer Dichte von über 800 kg/m³) kommt. Die Verdichtung verhindert ein Auseinanderfallen des Schneekörpers beim Zuführung auf eine zu Oberfläche oder an ein Kühlmittel-Aufnahmefach und ermöglicht so, dass der Schnee zielgerichtet und ohne wesentliche Verluste seinem Einsatzort zugeführt werden kann. Um den Schneekörper aus der Vorrichtung zu entfernen, wird der Boden aus der dritten Position zunächst in die zweite, anschließend in die erste Position zurückgeführt, in der der Boden seitlich von der Ausgabeöffnung angeordnet ist. Der Schneekörper fällt sodann senkrecht aus nun offenen Ausgabeöffnung hinaus.

Bei dem oberhalb des Bodens angeordneten Trennmesser handelt es sich um ein horizontal in das Innere des Vorlagebehälters hinein verschiebbares oder verschwenkbares Element, beispielsweise ein dünnes, formstabiles Blech, dessen dem Innenraum des Vorlagebehälters zugewandte Frontseite schneidenartig ausgebildet sein kann. Das Trennmesser kann mittels eines Antriebs aus einer ersten Position (hier auch "Öffnungsposition" genannt), in der sich das Trennmesser außerhalb des Innenraums des Vorlagebehälters befindet, in eine zweite Position (hier auch "Schließposition" genannt) bewegt werden, in der das Trennmesser den Querschnitt des Innenraums des Vorlagebehälters schneedicht absperrt und dabei Kohlendioxidschnee, der sich in dem unterhalb des Trennmessers befindlichen Abschnitt des Vorlagebehälters (hier auch "Dosierabschnitt" genannt) befindet, vom restlichen Kohlendioxidschnee oberhalb des Trennmessers abtrennt.

Gemäß der Erfindung ist das Trennmesser und/oder der Boden und/oder die Wände des Vorlagebehälters mit einer, vorzugsweise elektrischen, Heizeinrichtung ausgerüstet. Bei der Heizeinrichtung handelt es sich beispielsweise um eine Anordnung von mehreren, parallel zueinander im Trennmesser dem Boden angeordneten Heizstäben, bzw. um Heizdrähte oder Heizelemente, die in entsprechenden Durchführungen oder Nuten in den Wänden des Vorlagebehälters angeordnet sind. Die Heizleistung der Heizeinrichtungen ist jeweils so bemessen, dass sie in der Lage ist, unmittelbar anhaftenden Schnee zu verdampfen und so den entstehenden Schneekörper vom Trennmesser, dem Boden bzw. der Wand abzulösen. Dadurch wird insbesondere gewährleistet, dass kein Kohlendioxidschnee anbackt und im Vorlagebehälter verbleibt. Die Beheizung ermöglicht so eine sehr genaue Dosierung des Kohlendioxidschnees, da der erzeugte Schnee mit großer Zuverlässigkeit fast vollständig seinem Einsatzort zugeführt werden kann.

Eine besonders vorteilhafte Ausgestaltung der Erfindung sieht vor, dass der vertikale Abstand zwischen dem Boden und dem Trennmesser veränderbar ist. Beispielsweise umfasst der Vorlagebehälter dazu zwei vertikal gegeneinander verschiebbare Abschnitte, wobei in einem unteren Abschnitt der Boden und in einem oberen Abschnitt ein Trennmesser angeordnet ist. Durch die Verschiebung beider Abschnitte gegeneinander kann der vertikale Abstand zwischen Boden und Trennmesser - und damit das Volumen des Dosierabschnitts - stufenlos verändert werden. Die Bewegung der beiden Abschnitte gegeneinander erfolgt manuell oder motorgetrieben. In einer besonders bevorzugten Ausgestaltung greifen die beiden Abschnitte des Vorlagebehälters teleskopartig übereinander und lassen sich entlang ihrer gemeinsamen Längsachse stufenlos gegeneinander verschieben.

In einer ebenfalls zweckmäßigen Ausbildung der Erfindung ist der Vorlagebehälter mit zwei oder mehr vertikal beabstandet voneinander angeordneten Trennmessern ausgerüstet, die unabhängig voneinander bewegbar sind. Durch eine Mehrzahl von Trennmessern kann die Menge an ausgegebenem Kohlendioxidschnee gezielt verändert und den jeweiligen Erfordernissen angepasst werden. Insbesondere kann die Schneemenge auf diese Weise dem Kältebedarf der jeweiligen Kühlaufgabe angepasst werden, ohne dass die Vorrichtung dazu aufwändig umgebaut werden müsste. Selbstverständlich können alle diese Trennmesser auch mit Heizeinrichtungen ausgerüstet werden, um ein Anbacken von Kohlendioxidschnee zu verhindern.

Vorteilhafterweise ist das bzw. sind die Trennmesser und/oder der Boden mit von einer Steuereinheit angesteuerten Antrieben ausgerüstet. Die Steuereinheit sorgt für die koordinierte Betätigung der Antriebe und steht zu diesem Zweck mit geeigneten Sensoren in Datenverbindung, mit denen festgestellt wird, ob die Voraussetzungen für die Betätigung eines Antriebs vorliegen. Beispielsweise erfolgt die Betätigung des Trennmessers in Abhängigkeit von der Schneehöhe im Vorlagebehälter. Dabei wird das Trennmesser erst dann in seine Schließposition bewegt, wenn die im Vorlagebehälter durch die Zuführung von Kohlendioxidschnee anwachsende Schneesäule über die vertikale Position des Trennmessers hinausgewachsen ist, was durch einen entsprechenden Sensor festgestellt wird. Die Steuereinheit kann auch dafür sorgen, dass die vertikale Bewegung des Bodens in die Ausgabeöffnung hinein erst erfolgt, nachdem das Trennmesser seine Schließposition erreicht hat, was gleichfalls durch einen entsprechenden Sensor festgestellt wird.

Zum Bewegen des Bodens sind bevorzugt zwei Antriebe vorgesehen, deren Betätigung bevorzugt von der Steuereinheit kontrolliert werden. Einer der beispielsweise elektrisch, pneumatisch oder hydraulisch betätigten Antriebe bewirkt dabei die horizontale Bewegung des Bodens von der ersten in die zweite Position und zurück, der zweite Antrieb sorgt für die vertikale Bewegung des Bodens aus der zweiten in die dritte Position und zurück.

Zweckmäßigerweise ist der Innenquerschnitt der Ausgabeöffnung an die Oberfläche angepasst, auf der der Kohlendioxidschnee aufgetragen werden soll. Eine bevorzugte Ausgestaltung sieht dabei vor, dass der Innenquerschnitt der Ausgabeöffnung - und damit der Außenquerschnitt des Bodens - rechteckig, insbesondere quadratisch ausgebildet ist.

Die erfindungsgemäßen Vorrichtung wird beispielsweise verwendet, um Produktoberflächen auf eine niedrige Temperatur zu bringen oder, etwa für die Dauer eines Transports, auf einer niedrigen Temperatur zu halten. Eine besonders bevorzugte Verwendung besteht in der Abkühlung oder dem Kalthalten von Lebensmittelprodukten, beispielsweise Teiglinge, Fleisch, Fisch, Obst und Gemüse, jedoch ist die Erfindung nicht hierauf beschränkt. Vielmehr können auch andere Produkte, beispielsweise chemische oder pharmazeutische Erzeugnisse, abgekühlt, bzw. auf einer niedrigen Temperatur gehalten werden. Die erfindungsgemäße Vorrichtung kann insbesondere auch in einem Kühltunnel angeordnet sein, um Produktoberflächen mit Kohlendioxidschnee zu beaufschlagen.

In einer anderen bevorzugten Verwendung ist die erfindungsgemäße Vorrichtung Teil einer Apparatur zum Befüllen von Kühlmittel-Aufnahmefächern von Kühlbehältern mit Kohlendioxidschnee, insbesondere zur Transportkühlung von Lebensmitteln, und dient dabei zum Portionieren des als Kühlmittel eingesetzten Kohlendioxidschnees. Der durch die erfindungsgemäße Vorrichtung erzeugte Schneekörper aus verdichtetem Kohlendioxidschnee wird durch eine Zuführeinrichtung in das Aufnahmefach des Kühlbehälters eingefüllt. Bei der Zuführeinrichtung handelt es sich im einfachsten Falle um eine unterhalb der Ausgabeöffnung geneigt angeordnete Rinne, die zumindest die gleiche Breite wie die Ausgabeöffnung aufweist. Im Betrieb der Apparatur fällt der mittels der erfindungsgemäßen Vorrichtung erzeugte Schneekörper in die Rinne und gleitet durch diese in das zu füllende Aufnahmefach hinein, wobei durch die Verdichtung des Schnees ein vorzeitiges Auseinanderbrechen des Schneekörpers weitgehend vermieden wird. Innerhalb des Aufnahmefachs begünstigt die große Oberfläche des lediglich verdichteten, jedoch nicht zu einem kompakten Eisblock gepressten Schneekörpers dagegen eine gute Wärmeübertragung.

Anhand der Zeichnungen sollen Ausführungsbeispiele der Erfindung näher erläutert werden. In schematischen Ansichten zeigen:
- Fig. 1:: Eine erfindungsgemäße Vorrichtung in einer vertikalen Schnittansicht,
- Fig. 2a bis 2f:: Verschiedene Arbeitsschritte im Betrieb der Vorrichtung aus Fig. 1,
- Fig. 3:: Eine erfindungsgemäße Vorrichtung in einer anderen Ausführungsform,
- Fig. 4:: Eine erfindungsgemäße Vorrichtung in einer wieder anderen Ausführungsform.

Die in Fig. 1 gezeigte Vorrichtung 1 umfasst einen vertikal angeordneten Vorlagebehälter 2 mit thermisch gut isolierten Wänden. In das Innere des Vorlagebehälters 2 mündet eine Zuleitung 3 zum Zuführen von flüssigem Kohlendioxid ein, an deren Ende eine Entspannungsdüse angeordnet ist. Anstelle der hier gezeigten Zuleitung 3 für flüssiges Kohlendioxid ist im Rahmen der Erfindung auch direkte eine Zuführung für Kohlendioxidschnee vorstellbar, etwa der Art wie in der EP 2 363 377 A1 beschrieben. Möglich sind auch mehrere Zuleitungen für flüssiges Kohlendioxid und/oder Kohlendioxidschnee. An der unteren Stirnseite 6 des Vorlagebehälters 2 mündet eine Ausgabeöffnung 7 aus, im oberen Bereich des Vorlagebehälters 2 ist eine Gasabzugsleitung 5 angeordnet.

Die Ausgabeöffnung 7 wirkt in der unten näher beschriebenen Weise mit einem horizontal und vertikal beweglich angeordneten Boden 8 zusammen, dessen Außenquerschnitt dem Innenquerschnitt der Ausgabeöffnung 7 angepasst ist. An die Ausgabeöffnung 7 kann sich (hier nicht gezeigt) ein Dosiertrichter oder eine Rinnenanordnung zum Zuführen des in der Vorrichtung 1 erzeugten Kohlendioxidschnees an seinen Einsatzort anschließen, bei dem es sich beispielsweise um eine zu kühlende Produktoberfläche oder um ein Kühlmittel-Aufnahmefach eines Kühlbehälters handelt.

Vertikal beabstandet von der Stirnseite 6 ist ein horizontal verschieb- oder verschwenkbares Trennmesser 9 angeordnet, bei dem es sich beispielsweise um ein dünnes Blech oder eine Platte aus Metall oder Kunststoff handelt. Das dem Innenraum des Vorlagebehälters zugewandte Kante des Trennmessers 9 kann dabei schneidenartig ausgebildet sein. Das Trennmesser 9 ist mit Hilfe einer beispielsweise elektrisch angetriebenen Antriebseinheit 10 aus einer Öffnungsposition, in der sich das Trennmesser 9 außerhalb des Innenraums des Vorlagebehälters 2 befindet, horizontal in eine Schließposition verschieb- oder verschwenkbar, in der das Trennmesser 9 in den Innenraum des Vorlagebehälters 2 eingeschoben ist. In dieser zweiten Position teilt es den Innenraum des Vorlagebehälters 2 in zwei Teilvolumina, wobei ein sich zwischen Trennmesser 9 und Boden 8 erstreckende untere Teilvolumen einen Dosierabschnitt 11 definiert. Das Trennmesser 9 ist mit einer Heizeinrichtung 12 ausgerüstet, bei der es sich im Ausführungsbeispiel um mehrere im Trennmesser 9 parallel zueinander angeordnete elektrische Heizstäbe handelt.

Wie bereits erwähnt, ist der Boden 8 ist sowohl in horizontaler als auch in vertikaler Hinsicht bewegbar angeordnet. Dazu ist der Boden 8 mit einem Horizontalantrieb 13 und mit einem Vertikalantrieb 14 ausgerüstet. Bei den Antrieben 13, 14 handelt es sich beispielsweise um elektrische, pneumatische oder hydraulische Antriebe. Der Horizontalantrieb 13 ermöglicht eine horizontale Bewegung des Bodens 8 zwischen einer ersten Position, in der sich der Boden 8 seitlich am Vorlagebehälter 2 befindet, und einer zweite Position, in der der Boden 8 mit seiner Oberseite genau unterhalb der Ausgabeöffnung 7 befindet und dabei annähernd mit der Stirnseite 6 des Vorlagebehälters 2 fluchtet. In dieser zweiten Position, die ist in Fig. 1 gezeigt ist, verhindert der Boden das Austreten von Kohlendioxidschnee aus dem Vorlagebehälter 2. Der Vertikalantrieb 14 ermöglicht eine begrenzte Vertikalbewegung des Bodens 8 aus der oben genannten zweiten Position in die Ausgabeöffnung 7 hinein und wieder aus dieser hinaus.

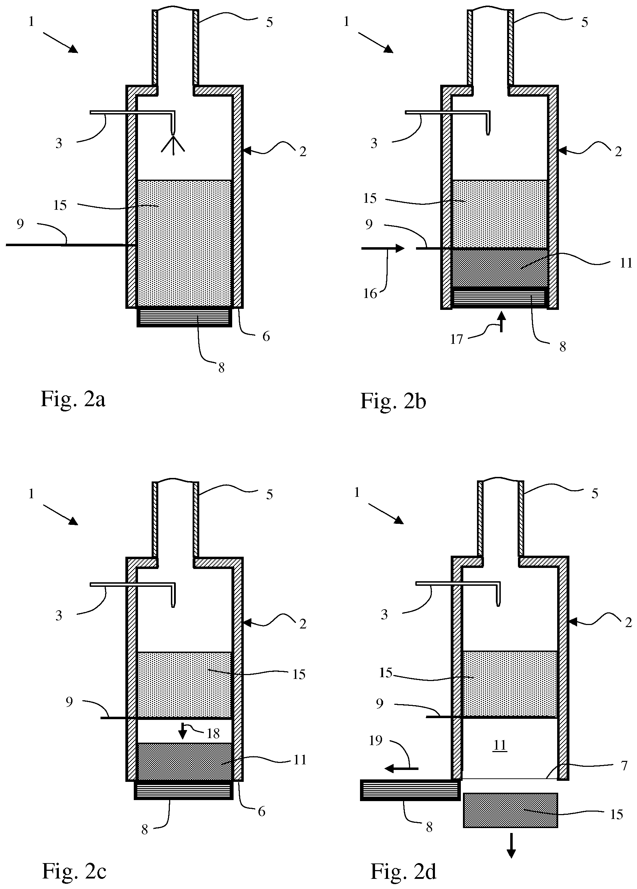

In Fig. 2a-f sind verschiedene Betriebszustände der Vorrichtung 1 gezeigt. Im in Fig. 2a gezeigten Betriebszustand schließt die Oberseite des Bodens 8 bündig mit der Stirnseite 6 des Vorlagebehälters 2 ab und verschließt dabei die Ausgabeöffnung 7 schneedicht. Dem Vorlagebehälter 2 wird kontinuierlich Kohlendioxidschnee 15 zugeführt. Dies erfolgt durch Zufuhr von flüssigem Kohlendioxid mit einem Druck von beispielsweise 15 bar, aus einem hier nicht gezeigten Tank über die Zuleitung 3. Das flüssige Kohlendioxid wird an einer am Ende der Zuleitung 3 montierten Entspannungsdüse auf einen Druck von unter 5,18 bar, bevorzugt auf Atmosphärendruck (1 bar), entspannt wird geht dabei in ein Gemisch aus Kohlendioxidschnee und Kohlendioxidgas über.

In dem in Fig. 2a gezeigten Betriebszustand ist das Trennmesser 9 seitlich vom Innenraum des Vorlagebehälters 2 angeordnet. Durch laufende Erzeugung oder Zufuhr von schneeförmigem Kohlendioxid füllt sich allmählich der Innenraum des Vorlagebehälters 2 oberhalb des Bodens 8 mit Kohlendioxidschnee 15 bis über die vertikale Position des Trennmessers 9 hinaus. Zugleich wird durch Entspannung oder Sublimation entstehendes Kohlendioxidgas über die Gasabzugsleitung 5 abgeführt.

Durch Betätigung der Antriebseinheit 10 wird das Trennmesser 9 in Richtung des Pfeils 16 in seine Schließposition verfahren (Fig. 2b). Der sich im Dosierabschnitt 11 des Vorlagebehälters 2 befindliche Kohlendioxidschnee 15 wird dadurch vom übrigen innerhalb des Vorlagebehälters 2 befindlichen Kohlendioxidschnee 15 abgetrennt. Durch Betätigung des Vertikalantriebs 14 wird der Boden 8 in Richtung des Pfeils 17 um eine begrenzte Strecke in die Ausgabeöffnung 7 hinein geschoben. Der zwischen Boden 8 und Trennmesser 9 befindliche Kohlendioxidschnee 15 wird dadurch zu einem Schneekörper erhöhter Dichte von beispielsweise 200-800 kg/m³ verfestigt, jedoch nicht zu einem Trockeneisblock gepresst.

Durch Betätigung des Vertikalantriebs 14 in entgegengesetzte Richtung wird der Boden 8 anschließend nach unten erneut in die vorherige Position gebracht, in der seine Oberseite mit der Stirnseite 6 des Vorlagebehälters 2 fluchtet (Fig. 2c). Der sich im Dosierabschnitt 11 befindliche Schneekörper aus verdichtetem Kohlendioxidschnee folgt unter der Wirkung der Schwerkraft dem Boden 8, wie durch den Pfeil 18 angedeutet. Dabei sorgt die Heizeinrichtung 12 dafür, dass kein Kohlendioxidschnee an der Unterseite des Trennmessers 9 haften bleibt.

Durch Betätigen des Horizontalantriebs 13 in Richtung des Pfeils 19 wird anschließend der Boden 8 horizontal in eine von der Ausgabeöffnung 7 beabstandete Position bewegt und dadurch die Ausgabeöffnung 7 freigegeben (Fig. 2d). Dadurch fällt der im Dosierabschnitt 11 befindliche Kohlendioxidschnee 15 aus dem Vorlagebehälter 2 hinaus, während der restliche Kohlendioxidschnee 15 durch das Trennmesser 9 im Vorlagebehälter 2 zurückgehalten wird. Der ausgeworfene Kohlendioxidschnee fällt beispielsweise direkt auf ein zu kühlendes Produkt oder in einen Behälter oder wird einer hier nicht gezeigten Einrichtung zum Zuführen an ein Produkt oder Kühlfach zugeführt.

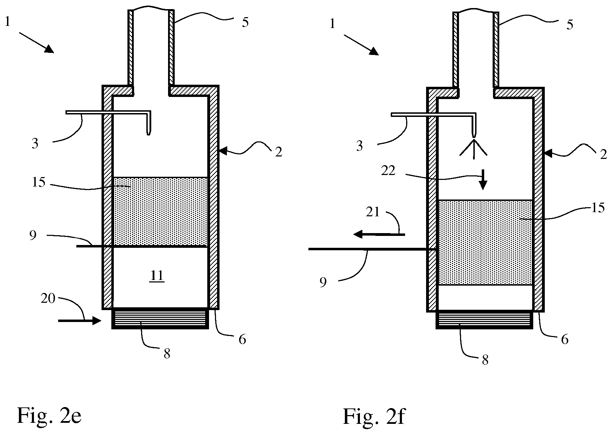

Durch erneute Betätigung der Antriebseinheit 9 wird der Boden 8 anschließend in Richtung des Pfeils 20 erneut in die Position bewegt, in der seine Oberseite die Ausgabeöffnung 7 gerade abdeckt (Fig. 2e). Die Ausgabeöffnung 7 wird dadurch schneedicht verschlossen. Anschließend wird durch Betätigung der Antriebseinheit 10 das Trennmesser 9 in Richtung des Pfeils 21 in seine Öffnungsposition gebracht (Fig. 2f), und Kohlendioxidschnee 15 fällt aus dem oberen Teil des Vorlagebehälters 2 in den Dosierabschnitt 11, wie durch Pfeil 22 angedeutet. Der über die Ausgabeöffnung 7 abgeführte Kohlendioxidschnee wird durch laufende Zuführung bzw. laufende Erzeugung an der Zuleitung 3 ergänzt, womit der in Fig. 2a gezeigte Betriebszustand wieder erreicht wird.

Die Antriebseinheiten 10, 13 ,14 sowie ein hier nicht gezeigtes Ventil, das die Zuführung des Kohlendioxids über die Zuleitung 3 steuert, stehen mit einer Steuereinheit 23 in Datenverbindung, mittels denen die Betätigung der Antriebseinheiten 10, 13, 14 automatisiert werden kann. Darüber hinaus kann die Steuereinheit 23 mit Sensoren 24, 25 in Datenverbindung stehen, mittels denen für den Betrieb der Vorrichtung 1 relevante Daten erfasst werden, beispielsweise die Füllhöhe von Kohlendioxidschnee 15 im Vorlagebehälter 2 (Sensor 24) oder die Anwesenheit eines mit Kohlendioxidschnee zu beaufschlagenden Produkts oder eines zu füllenden Kühlmittelfachs unterhalb der Vorrichtung 1 (Sensor 25).

Optional ist auch der Boden 8 mit einer Heizeinrichtung 26 ausgerüstet, um ein Anbacken von Kohlendioxidschnee am Boden 8 zu verhindern und damit zu gewährleisten, dass im Wesentlichen die gesamte im Dosierbereich 11 vorliegende Schneemenge dem Einsatzort zugeführt wird. Die Heizeinrichtung 26 ist in ähnlicher Weise wie die Heizeinrichtung 12 aufgebaut und umfasst beispielsweise eine Mehrzahl an elektrischen Heizstäben, die im Boden 8 parallel zueinander angeordnet sind und zumindest die gesamte, der Ausgabeöffnung 7 zugewandte Oberseite des Bodens 8 so weit aufheizen, dass eine dünne unmittelbar am Boden 8 anhaftende Schicht Kohlendioxidschnee sublimiert sodass sich der übrige Schnee bei der horizontalen Bewegung des Bodens 8 gegenüber der Stirnseite 6 von diesem ablöst.

Im gezeigten Ausführungsbeispiel sind auch die Wände des Vorlagebehälters 2 mit einer Heizeinrichtung 27 ausgerüstet, die die Aufgabe hat, ein Anbacken von Kohlendioxidschnee an den Wänden des Vorlagebehälters 2 zu verhindern. Ebenso wie die Heizeinrichtungen 12, 26 ist die Leistung der Heizeinrichtung 27 so bemessen, dass nur eine dünne Schicht an der Oberfläche des Schneekörpers auf eine Temperatur knapp oberhalb des Sublimationspunkts gebracht wird und dadurch an der Wank anhaftende Schneepartikel abgelöst werden. Die Heizeinrichtung 27 umfasst beispielsweise um elektrischen Heizstäben oder Heizdrähte, die in entsprechenden Nuten oder Durchführungen in den Wänden des Vorlagebehälters eingepasst sind, damit sie den Schneekörper beim Herausfallen aus dem Vorlagebehälter 2 nicht behindern.

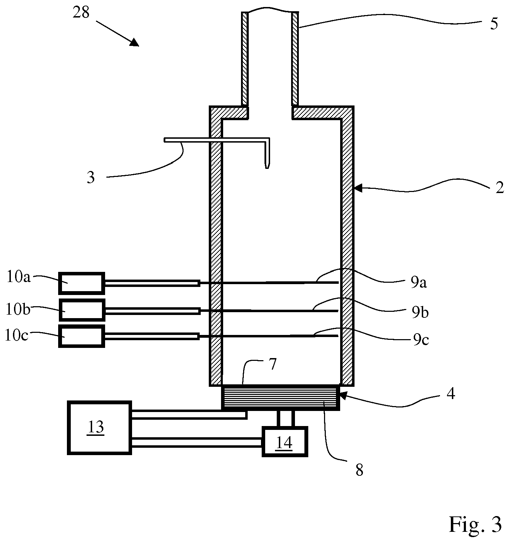

In der in Fig. 3 gezeigten Ausführungsform einer erfindungsgemäßen Vorrichtung 28 sind gleich wirkende Bestandteile mit den gleichen Bezugszeichen gekennzeichnet wie in Vorrichtung 1. Die Vorrichtung 28 unterscheidet sich von der Vorrichtung 1 lediglich dadurch, dass anstelle eines einzelnen Trennmessers 9 mehrere, im Ausführungsbeispiel drei, Trennmesser 9a, 9b, 9c vorgesehen sind, die jeweils vertikal beabstandet voneinander angeordnet sind. Die im Aufbau gleich wie das Trennmesser 9 ausgebildeten Trennmesser 9a, 9b, 9c lassen sich mittels Antriebseinheiten 10a, 10b, 10c unabhängig voneinander bewegen.

Die Mehrzahl an Trennmessern 9a, 9b, 9c ermöglicht eine Variation der Dosiermenge des Kohlendioxidschnees. Je nach der beabsichtigten Menge wird einer der Trennmesser 9a, 9b oder 9c ausgewählt, um den im Vorlagebehälter 2 befindlichen Kohlendioxidschnee zu separieren. Die Dosiermenge entspricht jeweils der Menge an Kohlendioxidschnee im Volumen zwischen dem Boden 8 und dem jeweils ausgewählten Trennmesser 9a, 9b, 9c.

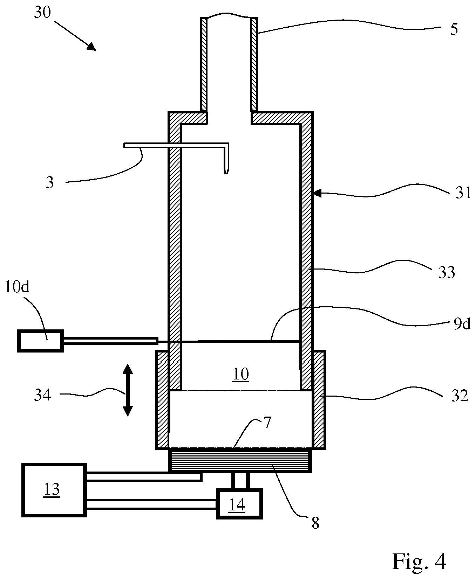

Die in Fig. 4 gezeigte Vorrichtung 30 ermöglicht eine stufenlose Einstellung der Dosiermenge des Kohlendioxidschnees. Auch hier sind gleich wirkende Bestandteile mit den gleichen Bezugszeichen gekennzeichnet wie in den Vorrichtungen 1 und 28. Die Vorrichtung 30 weist einen Aufgabebehälter 31 auf, der in zwei Abschnitte 32, 33 unterteilt ist, die teleskopartig ineinander verschiebbar ausgebildet sind, wie durch den Pfeil 34 angedeutet, wobei sich im gezeigten Ausführungsbeispiel beim Zusammenschieben der Vorrichtung 30 der obere Abschnitt 33 über den unteren Abschnitt 32 schiebt. Im unteren Abschnitt 32 ist ein Boden 8, im oberen Abschnitt 33 ein mit einem Antrieb 10d ausgerüstetes Trennmesser 9d angeordnet. Boden 8 und Trennmesser 9d sind bei der Vorrichtung 30 in gleicher Weise wie der Boden 8 und die Trennmesser 9, 9a, 9b, 9c aus Fig. 1 und Fig. 3 aufgebaut. Um die abzugebenden Menge an Kohlendioxidschnee einzustellen, wird der untere Abschnitt 32 gegenüber dem oberen Abschnitt 33 so weit verschoben, bis das Volumen zwischen Boden 8 und Trennmesser 9d, das bei der Vorrichtung 30 den Dosierabschnitt 11 darstellt, ausreicht, um die gewünschte Menge an Kohlendioxid aufzunehmen. Die Verschiebung der beiden Abschnitte 32, 33 gegeneinander erfolgt stufenlos und kann manuell oder mittels einer hier nicht gezeigten Antriebseinheit erfolgen. Selbstverständlich ist es auch möglich, eine der Vorrichtung 30 entsprechende Vorrichtung so auszubilden, dass der untere, den Boden 8 aufweisende Abschnitt einen größeren Durchmesser besitzt als der obere Abschnitt und sich beim Zusammenschieben der Vorrichtung über diesen schiebt.

Die Erfindung ermöglicht eine im Vergleich zu entsprechenden Vorrichtungen aus dem Stande der Technik genaue Dosierung einer Menge an Kohlendioxidschnee und besitzt eine geringe Störanfälligkeit aufgrund von Schneeanbackungen oder sich bildender Wassereiskörper. Die erfindungsgemäße Vorrichtung ermöglicht insbesondere die Befüllung einer Mehrzahl an Kühlmittelfächern von Transportbehältern in rascher Folge, die für den Transport von zu kühlenden Produkten vorgesehen sind. Die Erfindung eignet sich insbesondere für Dosierungen von Kohlendioxidschnee von beispielsweise über 100g, bevorzugt über 500g, die periodisch in kurzen Zeitabständen von wenigen Sekunden Dauer, beispielsweise im zeitlichen Abstand von 0,5 bis 5 Sekunden, abgegeben werden sollen. Zudem wird das zugleich mit dem Kohlendioxidschnee erzeugte Kohlendioxidgas unmittelbar nach seiner Entstehung abgeführt, ohne sich mit einer umgebenden Atmosphäre zu vermischen. Es ist somit von hoher Reinheit und kann problemlos weiter- oder wiederverwendet werden.

### Bezugszeichenliste

- 1: Vorrichtung
- 2: Vorlagebehälter
- 3: Zuleitung
- 4: -
- 5: Gasabzugsleitung
- 6: Untere Stirnseite
- 7: Ausgabeöffnung
- 8: Boden
- 9, 9a, 9b, 9c, 9d: Trennmesser
- 10,10a, 10b, 10c, 10d: Antriebseinheit
- 11: Dosierabschnitt
- 12: Heizeinrichtung
- 13: Horizontalantrieb
- 14: Vertikalantrieb
- 15: Kohlendioxidschnee
- 16: Pfeil
- 17: Pfeil
- 18: Pfeil
- 19: Pfeil
- 20: Pfeil
- 21: Pfeil
- 22: Pfeil
- 23: Steuereinheit
- 24: Sensor
- 25: Sensor
- 26: Heizeinrichtung
- 27: Heizeinrichtung
- 28: Vorrichtung
- 29: -
- 30: Vorrichtung
- 31: Aufgabebehälter
- 32: Unterer Abschnitt
- 33: Oberer Abschnitt
- 34: Pfeil

## Patentansprüche

1. Vorrichtung zum Dosieren von Kohlendioxidschnee, mit einem Vorlagebehälter (2, 31), in den eine Zuleitung (3) für flüssiges oder schneeförmiges Kohlendioxid sowie eine Gasabzugsleitung (5) zum Abführen von Kohlendioxidgas einmündet, und der eine bodenseitig angeordnete Ausgabeöffnung aufweist (7) und mit zumindest einem beabstandet von der Ausgabeöffnung (7) angeordneten Trennmesser (9, 9a, 9b, 9c, 9d) ausgerüstet ist, das von einer ersten, den Innenraum des Vorlagebehälters (2, 31) in zwei Teilvolumina separierende Position in eine zweite, vom Innenraum des Vorlagebehälters (2, 31) seitlich beabstandete Position bewegbar ist,
**dadurch gekennzeichnet,**
**dass** der Ausgabeöffnung (7) ein horizontal und vertikal beweglicher Boden (8) zugeordnet ist, der einen dem Innenquerschnitt der Ausgabeöffnung (7) entsprechenden Außenquerschnitt aufweist und der zwischen einer ersten Position, in der die Ausgabeöffnung (7) freigegeben und der Boden (8) seitlich am Vorlagebehälter (2, 31) angeordnet ist, einer zweiten Position, in der der Boden (8) die Ausgabeöffnung (7) auf Höhe ihrer Mündung verschließt, und einer dritten Position, in der der Boden (8) begrenzt in die Ausgabeöffnung (7) des Vorlagebehälters (2, 31) eingeführt ist, bewegbar ist und
**dass** das Trennmesser (9, 9a, 9b, 9c, 9d) und/oder der Boden (8) und/oder die Wände des Vorlagebehälters (2) mit einer Heizeinrichtung (12) ausgerüstet ist/sind.

2. Vorrichtung nach Anspruch 1, **dadurch gekennzeichnet, dass** der vertikale Abstand zwischen dem Boden (8) und dem Trennmesser (9d) veränderbar ist.

3. Vorrichtung nach einem der vorhergehenden Ansprüche, **dadurch gekennzeichnet, dass** der Vorlagebehälter (31) zwei teleskopartig gegeneinander verschiebbare Abschnitte (32, 33) umfasst, wobei in einem unteren Abschnitt (32) ein Boden (8) und in einem oberen Abschnitt (33) ein Trennmesser (9d) angeordnet ist.

4. Vorrichtung nach einem der vorhergehenden Ansprüche, **dadurch gekennzeichnet, dass** mehrere übereinander angeordnete und unabhängig voneinander horizontal bewegbare Trennmesser (9a, 9b, 9c) vorgesehen sind.

5. Vorrichtung nach einem der vorhergehenden Ansprüche, dass das bzw. die Trennmesser (9, 9a, 9b, 9c, 9d) und/oder der Boden (8) mit von einer Steuereinheit (23) angesteuerten Antrieben (10, 10a, 10b, 10c, 10d; 13, 14) ausgerüstet ist/sind und mittels der Steuereinheit (23) die Betätigung des Antriebs / der Antriebe in Abhängigkeit von wenigstens einem Sensor (24, 25) gemessenen Parametern steuerbar ist.

6. Vorrichtung nach einem der vorhergehenden Ansprüche, **dadurch gekennzeichnet, dass** der Boden (8) mit zwei Antrieben (13, 14) ausgerüstet ist, von denen ein erster Antrieb (13) eine horizontale Bewegung des Bodens (8) und ein zweiter Antrieb (14) eine vertikale Bewegung des Bodens ermöglicht.

7. Vorrichtung nach einem der vorhergehenden Ansprüche, **dadurch gekennzeichnet, dass** der Innenquerschnitt der Ausgabeöffnung (7) und der Außenquerschnitt des Bodens (8) rechteckig ausgebildet ist.

8. Vorrichtung zum Befüllen von Kühlmittel-Aufnahmefächern von Kühlbehältern mit Kohlendioxidschnee, insbesondere zur Transportkühlung von Lebensmitteln, mit einer Einrichtung zum Portionieren des Kohlendioxidschnees und einer Einrichtung zum Zuführen des portionierten Kohlendioxidschnees an das Kühlmittel-Aufnahmefach,
**dadurch gekennzeichnet,**
**dass** als Einrichtung zum Portionieren des Kohlendioxidschnees eine Vorrichtung (2, 28, 30) nach einem der vorhergehenden Ansprüche eingesetzt wird.

## Claims

1. Apparatus for metering carbon dioxide snow, with a feed container (2, 31), into which a feed line (3) for liquid or snowy carbon dioxide and a gas vent line (5) for discharging carbon dioxide gas open, and which has a discharge opening (7) which is arranged on the bottom side, and which is equipped with at least one dividing knife (9, 9a, 9b, 9c, 9d) which is arranged spaced apart from the discharge opening (7) and can be moved from a first position which separates the interior space of the feed container (2, 31) into two part volumes, into a second position which is spaced apart laterally from the interior space of the feed container (2, 31),
**characterized**
**in that** the discharge opening (7) is assigned a horizontally and vertically movable bottom (8) which has an external cross section which corresponds to the internal cross section of the discharge opening (7), and which bottom (8) can be moved between a first position, in which the discharge opening (7) is released and the bottom (8) is arranged laterally on the feed container (2, 31), a second position, in which the bottom (8) closes the discharge opening (7) at the level of its orifice, and a third position, in which the bottom (8) is introduced to a limited extent into the discharge opening (7) of the feed container (2, 31), and
**in that** the dividing knife (9, 9a, 9b, 9c, 9d) and/or the bottom (8) and/or the walls of the feed container (2) are/is equipped with a heating device (12).

2. Apparatus according to Claim 1, **characterized in that** the vertical spacing between the bottom (8) and the dividing knife (9d) is variable.

3. Apparatus according to one of the preceding claims, **characterized in that** the feed container (31) comprises two sections (32, 33) which can be displaced telescopically with respect to one another, a bottom (8) being arranged in a lower section (32) and a dividing knife (9d) being arranged in an upper section (33).

4. Apparatus according to one of the preceding claims, **characterized in that** a plurality of dividing knives (9a, 9b, 9c) which are arranged above one another and can be moved horizontally independently of one another are provided.

5. Apparatus according to one of the preceding claims, **characterized in that** the dividing knife or knives (9, 9a, 9b, 9c, 9d) and/or the bottom (8) are/is equipped with drives (10, 10a, 10b, 10c, 10d; 13, 14) which are actuated by a control unit (23), and the actuation of the drive/drives can be controlled by means of the control unit (23) in a manner which is dependent on parameters which are measured by at least one sensor (24, 25).

6. Apparatus according to one of the preceding claims, **characterized in that** the bottom (8) is equipped with two drives (13, 14), of which a first drive (13) makes a horizontal movement of the bottom (8) possible and a second drive (14) makes a vertical movement of the bottom possible.

7. Apparatus according to one of the preceding claims, **characterized in that** the internal cross section of the discharge opening (7) and the external cross section of the bottom (8) are of rectangular configuration.

8. Apparatus for filling coolant storage compartments of cooling containers with carbon dioxide snow, in particular for cooling foodstuffs during transport, with a device for portioning the carbon dioxide snow and a device for feeding the portioned carbon dioxide snow to the coolant storage compartment,
**characterized**
**in that** an apparatus (2, 28, 30) according to one of the preceding claims is used as device for portioning the carbon dioxide snow.

## Revendications

1. Dispositif pour le dosage de neige carbonique, muni d'un contenant collecteur (2, 31), dans lequel une conduite d'alimentation (3) pour du dioxyde de carbone liquide ou sous forme de neige, ainsi qu'une conduite de soutirage de gaz (5) pour le déchargement de dioxyde de carbone gazeux débouchent, et qui comprend une ouverture de sortie (7) agencée du côté du fond et est équipé d'au moins une lame de séparation (9, 9a, 9b, 9c, 9d) agencée écartée de l'ouverture de sortie (7), qui est mobile à partir d'une première position, séparant l'espace intérieur du contenant collecteur (2, 31) en deux volumes partiels, vers une deuxième position écartée latéralement de l'espace intérieur du contenant collecteur (2, 31), **caractérisé**
**en ce qu'**un fond mobile horizontalement et verticalement (8) est associé à l'ouverture de sortie (7), qui présente une section transversale extérieure correspondant à la section transversale intérieure de l'ouverture de sortie (7), et qui est mobile entre une première position, dans laquelle l'ouverture de sortie (7) est libérée et le fond (8) est agencé latéralement sur le contenant collecteur (2, 31), une deuxième position, dans laquelle le fond (8) ferme l'ouverture de sortie (7) à hauteur de son embouchure, et une troisième position, dans laquelle le fond (8) est introduit de manière limitée dans l'ouverture de sortie (7) du contenant collecteur (2, 31), et
**en ce que** la lame de séparation (9, 9a, 9b, 9c, 9d) et/ou le fond (8) et/ou les parois du contenant collecteur (2) sont équipés d'un dispositif de chauffage (12).

2. Dispositif selon la revendication 1, **caractérisé en ce que** l'écart vertical entre le fond (8) et la lame de séparation (9d) est modifiable.

3. Dispositif selon l'une quelconque des revendications précédentes, **caractérisé en ce que** le contenant collecteur (31) comporte deux sections (32, 33) déplaçables télescopiquement l'une par rapport à l'autre, un fond (8) étant agencé dans une section inférieure (32) et une lame de séparation (9d) étant agencée dans une section supérieure (33).

4. Dispositif selon l'une quelconque des revendications précédentes, **caractérisé en ce que** plusieurs lames de séparation (9a, 9b, 9c) agencées les unes au-dessus des autres et mobiles horizontalement indépendamment les unes des autres sont prévues.

5. Dispositif selon l'une quelconque des revendications précédentes, **caractérisé en ce que** la ou les lames de séparation (9, 9a, 9b, 9c, 9d) et/ou le fond (8) sont équipés d'entraînements (10, 10a, 10b, 10c, 10d ; 13, 14) commandés par une unité de commande (23) et l'actionnement de l'entraînement/des entraînements peut être commandé au moyen de l'unité de commande (23) en fonction de paramètres mesurés par au moins un capteur (24, 25).

6. Dispositif selon l'une quelconque des revendications précédentes, **caractérisé en ce que** le fond (8) est équipé de deux entraînements (13, 14), parmi lesquels un premier entraînement (13) permet un mouvement horizontal du fond (8) et un deuxième entraînement (14) permet un mouvement vertical du fond.

7. Dispositif selon l'une quelconque des revendications précédentes, **caractérisé en ce que** la section transversale intérieure de l'ouverture de sortie (7) et la section transversale extérieure du fond (8) sont configurées sous forme rectangulaire.

8. Dispositif pour le remplissage de compartiments de réception d'agent réfrigérant de contenants réfrigérants avec de la neige carbonique, notamment pour la réfrigération de transport de produits alimentaires, muni d'un appareil pour la division de la neige carbonique et d'un appareil pour l'acheminement de la neige carbonique divisée vers un compartiment de réception d'agent réfrigérant,
**caractérisé**
**en ce qu'**un dispositif (2, 28, 30) selon l'une quelconque des revendications précédentes est utilisé en tant qu'appareil pour la division de la neige carbonique.
